# EUROPÄISCHE PATENTSCHRIFT

(11) **EP 2 670 499 B1**
(45) Veröffentlichungstag und Bekanntmachung des Hinweises auf die Patenterteilung: **14.09.2016**
(21) Anmeldenummer: 12703453.6
(22) Anmeldetag: 06.02.2012
(51) Int. Cl.: B01D 11/02

(54) **CO2-EXTRAKTIONSVERFAHREN**
CO2 EXTRACTION PROCESS
PROCEDE D'EXTRACTION AU CO2

(30) Priorität: 04.02.2011 DE 102011010396
(43) Veröffentlichungstag der Anmeldung: 11.12.2013
(73) Patentinhaber: NATECO2 GmbH & Co. KG, 85283 Wolnzach (DE)
(72) Erfinder: WUZIK, Andreas, 86836 Untermeitingen (DE); SCHULMEYR, Josef, 85283 Wolnzach (DE)
(74) Vertreter: Stippl, Hubert
(86) Internationale Anmeldenummer: PCT/EP2012/000521
(87) Internationale Veröffentlichungsnummer: WO 2012/104104

(56) Entgegenhaltungen:
- EP-A1- 1 566 164
- DE-C1- 10 016 695
- US-A- 2 213 808
- US-A- 5 028 326
- US-A- 5 092 983

## Beschreibung

Die vorliegende Erfindung betrifft ein neuartiges Verfahren zur Extraktion eines Stoffgemisches unter Verwendung von flüssigem oder überkritischem CO₂ als Extraktionsmittel.

### Technologischer Hintergrund

Mit flüssigem oder überkritischem CO₂ werden üblicherweise Extrakte aus pflanzlichen Stoffen für deren weitere Verwendung gewonnen. Beispielsweise werden hierdurch Koffein aus Kaffeebohnen, Hopfenharze aus Hopfen, Aromen, Farbstoffe sowie sonstige Inhaltsstoffe aus Gewürzpflanzen gewonnen. Hierbei wird eine Stoffkomponente als Ausgangsmaterial mit flüssigem oder überkritischem CO₂ in Kontakt gebracht, indem eine Schüttung der Stoffkomponente großvolumig von flüssigem oder überkritischem CO₂ durchströmt wird. Der in dem CO₂ gelöste Extrakt wird anschließend abgeschieden und einer weiteren Verwertung zugeführt. Je gleichmäßiger der Kontakt des CO₂ mit der Stoffkomponente ist, desto wirksamer ist die Extraktionsprozess und desto kürzer sind die Extraktionszeiten. Man spricht in diesem Zusammenhang auch von Perkolation. Je besser die Perkolation desto besser das Extraktionsergebnis und desto kürzer die Extraktionszeit. Sofern es sich allerdings bei dem Stoffgemisch um sehr feine pulverförmige Partikel handelt gibt es bei der CO₂-Extraktion Probleme unterschiedlicher Art. Zum einen bereitet die Trennung des Extraktionsmittels mit dem Wertstoff (Extrakt) von der restlichen Matrix Schwierigkeiten. So kann es zum ungewollten Durchgang durch den Filter (je nach Wahl einer Porenweite) oder zu einem Verschluss der Filterporen oder zur Verdichtung von Teilen oder des gesamten Extraktionsbettes kommen. Ferner sinkt die Effektivität bzw. Wirtschaftlichkeit des Extraktionsverfahrens, da lediglich eine langsame Durchströmung möglich ist. Ferner besteht die Gefahr, dass das flüssige oder überkritische CO₂ das Gut nicht gleichmäßig durchströmt sondern es zu Kanalbildung kommt und sich hierdurch die Perkolation erheblich verschlechtert. Bei der Extraktion von flüssigem Gut kann das Gut während der Extraktion eine pastöse Konsistenz einnehmen. Hierdurch bedingt kann es zu Verklebungen kommen, die ein Handling des Guts während des Extraktionsprozesses erheblich erschweren. Dies wiederum kann sogar Gefahren bedingen.

### Nächstliegender Stand der Technik

Aus der EP 1 424 385 B1 ist ein Verfahren zur Herstellung eines Xanthohumolangereicherten Hopfenextrakts und dessen Verwendung bekannt. Hierbei werden Hopfenpellets als Stoffgemisch einer Extraktion mit überkritischem CO₂-Gas unterzogen.

Aus der DE 33 46 776 C2 ist ein Verfahren zur Extraktion von Hopfeninhaltsstoffen unter Verwendung von überkritischem CO₂-Gas aus Hopfen, Hopfenpulver oder Hopfenpellets bekannt.

Aus der US 5 028 326 ist ein Verfahren zur Extraktion von organischen Inhaltsstoffen unter Verwendung vom porösen Gut bekannt.

### Aufgabe der vorliegenden Erfindung

Die Aufgabe der vorliegenden Erfindung besteht darin, ein neuartiges Verfahren zur Extraktion von bei der Extraktion schwierig zu handhabenden Gut zur Verfügung zu stellen, welches eine gesteigerte Effektivität/Wirtschaftlichkeit ermöglicht.

### Lösung der Aufgabe

Die vorstehende Aufgabe wird dadurch gelöst, dass es sich bei dem Stoffgemisch um pulverförmige Partikel oder ein pastöses Gut handelt und das Stoffgemisch vor Beginn des Extraktionsverfahrens mit einem porösen Additiv vorzugsweise mechanisch zwangsvermischt wird. Dementsprechend wird dem Extraktionsbehälter ein rieselfähiges Gemisch aus dem zu extrahierenden Gut sowie dem porösen Additiv zugeführt. Das poröse Material bewirkt, dass sich in den Poren die pulverförmigen Partikel des zu extrahierenden Guts oder das zu extrahierende pastöse Gut anlagern und hierdurch durch die Rieselfähigkeit des Gemisches ein fließfähiges Schüttgut entsteht, welches eine nachteilige Kanalbildung verhindert. Ebenso kommt es zu keinen Verklebungen. Das Additiv oder Agens wirkt hierbei nicht als Filtermittel, sondern verhindert die schädliche Kanalbildung im Extraktionsbehälter.

Bei zähflüssigen Substanzen besteht die Gefahr, dass während des Extraktionsvorgangs die Zähflüssigkeit der Substanz noch zunimmt und es hierdurch zu einer Verstopfung der Anlage und als Folge davon zu einer ungewollten Druckerhöhung sowie wiederum als Folge davon zu einer Explosion kommen kann. Durch die Zugabe des Additivs wird die Fließfähigkeit der zähflüssigen Substanz während des Extraktionsprozesses erhalten und die vorstehend beschriebene Gefahr vermieden.

Das Anhaften der pulverförmigen Partikel an dem porösen Gut erfolgt aufgrund der an der Oberfläche wirksamen Adsorptionskräfte.

Das erfindungsgemäße Verfahren ist besonders wirksam bei pulverförmigen Partikeln des zu extrahierenden Stoffgemisches mit einem Korngrößenmaximum von kleiner als 150 µm, vorzugsweise kleiner als 50 µm, vorzugsweise kleiner als 30 µm, vorzugsweise kleiner 10 µm, vorzugsweise kleiner als 7 µm, besonders vorzugsweise kleiner als 5 µm.

Bei dem porösen Material handelt es sich vorzugsweise um mesoporöses Material mit einem Porengrößenmaximum im Bereich von 10µm bis 50µm oder um makroporöses Material mit einem Porengrößenmaximum im Bereich von 50µm bis 500µm handelt.

Gezielt geblähtes Material eignet sich aufgrund seiner Porösität und Beschaffenheit ganz besonders gut.

Mineralisches Material hat den Vorteil, dass es im Rahmen des Extraktionsverfahrens selbst nicht im Wesentlichen beeinträchtigt wird d.h. sich neutral verhält. Beispielsweise kann das Additiv aus der Gruppe Ton, Glas, Steinzeug, Perlit, Kieselgel, Kieselgur, Bimsstein ausgewählt werden. Perlit hat sich als besonders wirksam herausgestellt. Auch eine Kombination aus unterschiedlichen Materialien ist verwendbar. Mineralische Materialien können in geblähter Form erzeugt werden, wie z. B. Blähton, Porenbeton, Perlit etc.

Alternativ kann auch organisches Material z.B. Kunststoffe, Cellulose, Fleece und dergleichen zum Einsatz kommen.

Was die Mischung von porösem Material zu dem Stoffgemisch anbelangt, hat sich ein Bereich von 10:1 bis 1:2, vorzugsweise 5:1 bis 1:2 Vol.-%, besonders vorzugsweise 2:1 bis 1:2 Vol.-% als besonders geeignet erwiesen.

Während der Extraktion mit flüssigem oder überkritischem CO₂ kann Letzterem ein Schleppmittel, z. B. Ethanol oder Wasser, zugeführt werden.

Gemäß einem weiteren Ausführungsbeispiel kann durch Auswahl des porösen Additivs und Vermischen desselben mit dem Stoffgemisch die Extraktion eines Stoffes aus dem Stoffgemisch gezielt gesteigert oder gezielt reduziert werden im Vergleich zu einer Extraktion des Stoffgemisches ohne porösem Additiv. So kann beispielsweise aus einem mit einem Pestizid belastetes Stoffgemisch durch gezielte Auswahl eines porösen Additivs, welches die Löslichkeit des Pestizids reduziert, ein pestizidfreies Extrakt gewonnen werden. Andererseits können poröse Additive ausgewählt werden, die die Löslichkeit, insbesondere durch vorherige Benetzüng mit einem Schleppmittel,steigern und deshalb eine gesteigerte Ausbeute eines im Extrakt erwünschten Stoffes ermöglichen.

Alternativ bewirkt das erfindungsgemäße Verfahren durch die Zugabe des porösen Additivs eine wirksame Extraktion von solchen Stoffgemischen, bei denen eine Extraktion sonst ohne Additiv nicht möglich wäre.

### Beschreibung der Erfindung anhand von Ausführungsbeispielen

Nachstehend werden Ausführungsbeispiele zu dem erfindungsgemäßen Verfahren beschrieben.

### Referenzbeispiel 1

Dieses Referenzbeispiel betrifft die Extraktion von Bacillus Subtilis Pulver unter Anwendung von komprimiertem CO₂-Gas als Extraktionsmittel.

| | |
|---|---|
| Korngröße Pulver: | 1 - 5 µm |
| Schuttgewicht Pulver: | 42 - 45 g/100ml |

### Ausführungsbeispiel 1

Dieses Beispiel betrifft die Extraktion eines Gemisches aus Bacillus Subtilis Pulver und Perlit als porösem Additiv unter Anwendung von komprimiertem CO₂-Gas als Extraktionsmittel.

| | |
|---|---|
| Korngröße Pulver: | 1 - 5 µm |
| Schuttgewicht Pulver: | 42 - 45 g/100ml |
| Korngröße Perlit: | 0 - 1 mm (s. Spezifikation) |
| Schüttgewicht Perlit: | 60 kg/m³ |
| Mischungsverhältnis: | 2 : 1 Vol.-% (Perlit: Pulver) |
| Schüttgewicht Gemisch: | 150 kg/m³ |

Durch die Herstellung der Mischung wird ein rieselfähiges Produkt erzeugt. Bei der CO₂ Extraktion kam es zu keiner Kanalbildung im Extraktionsbehälter. Aufgrund der besseren Perkolation der Schüttung kam es zu einer Erhöhung der Extraktausbeute um bis zu 20% im Vergleich zum Referenzbeispiel. Besonders vorteilhaft ist die Zugabe des Additivs speziell bei großtechnischer Produktion. Die Perkolation ist hierbei mit besonders guter Ausbeute möglich.

### Referenzbeispiel 2

Dieses Referenzbeispiel betrifft die Extraktion einer sprühgetrockneten Alge (Haematococcus Pluvialis) in Pulverform unter Anwendung von komprimiertem CO₂-Gas als Extraktionsmittel.

| | |
|---|---|
| Korngröße Pulver: | vermutlich 1 - 5 µm |
| Schüttgewicht Pulver: | 0,5 kg/l |

### Ausführungsbeispiel 2

Extraktion eines Gemisches der sprühgetrockneten Alge (Haematococcus Pluvialis) in Pulverform mit Perlit als porösem Additiv unter komprimiertem CO₂.

| | |
|---|---|
| Korngröße Pulver: | vermutlich 1 - 5 µm |
| Schüttgewicht Pulver: | 0,5 kg/l |
| Korngröße Perlit: | 0 - 1 mm (s. Spezifikation) |
| Schüttgewicht Perlit: | 60 kg/m³ |
| Mischungsverhältnis: | 1 : 2 Vol.-% (Perlit: Pulver) |
| Schüttgewicht Gemisch: | 280 kg/m³ |

Durch die Herstellung des Gemisches konnte der Volumenstrom des Extraktionsmittels im Vergleich zum Referenzbeispiel 2 um 20% gesteigert werden. Auch der Durchsatz des Lösungsmittels konnte um 15 % gesenkt werden.

### Referenzbeispiel 3

Die Entölung von flüssigem Rohlecithin mit flüssigem_CO₂ führt aufgrund der klebrigen Konsistenz des Rohlecithin zu Verklebungen von Filtern und Einbauten.

### Ausführungsbeispiel 3

2,5 1 Perlit werden mit 1 1 Rohlecithin zu einem Gemisch vermengt. Es entsteht ein rieselfähiges und extrahierbares Ausgangsprodukt, das mit flüssigem_CO₂ auf unter 1 Gew.-% Ölgehalt entölt wird. Das gewonnene ölarme Lecithin kann durch Auswaschung mit einem organischen Lösungsmittel aus dem Perlit gewonnen werden. Der Einsatz von Perlit ermöglicht die gefahrlose Extraktion von pastösen Stoffen, die ansonsten während der Hochdruckextraktion zu Verklebungen von Filtern und Einbauten führen können.

## Patentansprüche

1. Verfahren zur Extraktion unter Verwendung von flüssigem oder überkritischem CO₂, als Extraktionsmittel, mit dem aus einem Stoffgemisch mindestens eine Stoffkomponente herausgelöst wird, wobei das CO₂ das Stoffgemisch im Extraktionsbehälter durchströmt,
**dadurch gekennzeichnet, dass**
es sich bei dem Stoffgemisch um pulverförmige Partikel handelt und
das Stoffgemisch mit einem porösen Gut als Additiv vermischt wird, so dass das CO₂ während der Extraktion das Gemisch durchströmt, wobei
das Gemisch aus porösem Additiv und Stoffgemisch aufgrund des zugegebenen porösen Additivs im Gegensatz zum Stoffgemisch alleine rieselfähig ist.
und dem Extraktionsbehälter das rieselfähiges Gemisch aus dem porösen Additiv und Stoffgemisch zugeführt wird.

2. Verfahren zur Extraktion unter Verwendung von flüssigem oder überkritischem CO₂, als Extraktionsmittel, mit dem aus einem Stoffgemisch mindestens eine Stoffkomponente herausgelöst wird, wobei das CO₂ das Stoffgemisch im Extraktionsbehälter durchströmt,
**dadurch gekennzeichnet, dass**
es sich bei dem Stoffgemisch um pastöses Gut handelt und
das Stoffgemisch mit einem porösen Additiv vermischt wird, so dass das CO₂ während der Extraktion das Gemisch durchströmt, wobei
das Gemisch aus porösem Additiv und Stoffgemisch aufgrund des zugegebenen porösen Additivs im Gegensatz zum Stoffgemisch alleine rieselfähig ist
und dem Extraktionsbehälter das rieselfähiges Gemisch aus dem porösen Additiv und Stoffgemisch zugeführt wird.

3. Verfahren nach Anspruch 1 oder 2,
**dadurch gekennzeichnet, dass**
das Stoffgemisch während der Extraktion an dem porösen Additiv anhaftet.

4. Verfahren nach Anspruch 1 oder 3,
**dadurch gekennzeichnet, dass**
es sich bei den pulverförmigen Partikel des Stoffgemisches um Korngrößen mit einem Korngrößenmaximum der Korngrößenverteilung von kleiner 150 µm, vorzugsweise kleiner als 50 µm, vorzugsweise kleiner als 30 µm, vorzugsweise kleiner 10 µm, vorzugsweise kleiner
7 µm, besonders vorzugsweise von kleiner 5 µm handelt.

5. Verfahren nach mindestens einem der vorhergehenden Ansprüche,
**dadurch gekennzeichnet, dass** es sich bei dem porösen Additiv um mesoporöses oder makroporöses Material handelt.

6. Verfahren nach mindestens einem der vorhergehenden Ansprüche,
**dadurch gekennzeichnet, dass**
es sich bei dem porösen Additiv um geblähtes Material handelt.

7. Verfahren nach mindestens einem der vorhergehenden Ansprüche,
**dadurch gekennzeichnet, dass**
es sich bei dem porösen Additiv um ein mineralisches Material handelt.

8. Verfahren nach Anspruch 7,
**dadurch gekennzeichnet, dass**
es sich bei dem porösen Additiv um mindestens ein Material aus der Gruppe Ton, Glas, Steinzeug, Perlit, Kieselgel, Kieselgur, Bimsstein handelt.

9. Verfahren nach mindestens einem der Ansprüche 1 - 6,
**dadurch gekennzeichnet, dass**
es sich bei dem porösen Additiv um ein organisches Material handelt.

10. Verfahren nach Anspruch 9,
**dadurch gekennzeichnet, dass**
es sich bei dem Additiv um mindestens ein Material aus der Gruppe Kunststoff, Cellulose, Polyelektrolyte handelt.

11. Verfahren nach mindestens einem der vorhergehenden Ansprüche,
**dadurch gekennzeichnet, dass**
ein Mischungsverhältnis von porösem Additiv zu Stoffgemisch von 10:1 bis 1:2 Vol.-%, vorzugsweise von 5:1 bis 1:2 Vol.-%, besonders vorzugsweise von 2:1 bis 1:2 Vol.-% vorliegt.

12. Verfahren nach mindestens einem der vorhergehenden Ansprüche,
**dadurch gekennzeichnet, dass**
durch Auswahl des porösen Additivs und Vermischen desselben mit dem Stoffgemisch die Extraktion eines Stoffes aus dem Stoffgemisch gezielt gesteigert oder gezielt reduziert wird im Vergleich zu einer Extraktion des Stoffgemisches ohne porösem Additiv.

## Claims

1. Process for extraction using liquid or supercritical CO₂ as extraction medium, using which at least one substance component is dissolved out of a mixture of substances, wherein the CO₂ flows through the mixture of substances in the extraction container,
**characterized in that**
the mixture of substances is pulverulent particles and
the mixture of substances is mixed with a porous item as additive, in such a manner that the CO₂ flows through the mixture during the extraction, wherein
the mixture of porous additive and mixture of substances, on account of the added porous additive, in contrast to the mixture of substances alone, is free-flowing,
and the free-flowing mixture of the porous additive and mixture of substances is fed to the extraction container.

2. Process for extraction using liquid or supercritical CO₂ as extraction medium, using which at least one substance component is dissolved out of a mixture of substances, wherein the CO₂ flows through the mixture of substances in the extraction container,
**characterized in that**
the mixture of substances is a pasty item and
the mixture of substances is mixed with a porous additive in such a manner that the CO₂ flows through the mixture during the extraction, wherein the mixture of porous additive and mixture of substances, owing to the added porous additive, in contrast to the mixture of substances alone, is free-flowing
and the free-flowing mixture of the porous additive and mixture of substances is fed to the extraction container.

3. Process according to Claim 1 or 2,
**characterized in that**
the mixture of substances adheres to the porous additive during the extraction.

4. Process according to Claim 1 or 3,
**characterized in that**
the pulverulent particles of the mixture of substances have particle sizes having a particle size maximum of the particle size distribution of less than 150 µm, preferably less than 50 µm, preferably less than 30 µm, preferably less than 10 µm, preferably less than
7 µm, particularly preferably less than 5 µm.

5. Process according to at least one of the preceding claims,
**characterized in that**
the porous additive is a mesoporic or macroporic material.

6. Process according to at least one of the preceding claims,
**characterized in that**
the porous additive is expanded material.

7. Process according to at least one of the preceding claims,
**characterized in that**
the porous additive is a mineral material.

8. Process according to Claim 7,
**characterized in that**
the porous additive is at least one material from the group clay, glass, stoneware, perlite, silica gel, kieselgur, pumice stone.

9. Process according to at least one of Claims 1-6,
**characterized in that**
the porous additive is an organic material.

10. Process according to Claim 9,
**characterized in that**
the additive is at least one material from the group plastic, cellulose, polyelectrolytes.

11. Process according to at least one of the preceding claims,
**characterized in that**
a mixing ratio of porous additive to mixture of substances of 10:1 to 1:2% by volume, preferably from 5:1 to 1:2% by volume, particularly preferably from 2:1 to 1:2% by volume is present.

12. Process according to at least one of the preceding claims,
**characterized in that**
by selection of the porous additive and mixing same with the mixture of substances, the extraction of a substance from the mixture of substances can be increased in a targeted manner or reduced in a targeted manner compared with an extraction of the mixture of substances without porous additive.

## Revendications

1. Procédé d'extraction utilisant du CO₂ liquide ou supercritique, en tant qu'agent d'extraction, avec lequel au moins un composant est extrait d'un mélange de matières, le CO₂ traversant le mélange de matières dans le contenant d'extraction, **caractérisé en ce que** le mélange de matières consiste en des particules en poudre et le mélange de matières est mélangé avec un produit poreux en tant qu'additif, de sorte que le CO₂ traverse le mélange pendant l'extraction, le mélange de l'additif poreux et du mélange de matières étant fluide en raison de l'additif poreux ajouté contrairement au mélange de matières seul, et le mélange fluide de l'additif poreux et du mélange de matières étant introduit dans le contenant d'extraction.

2. Procédé d'extraction utilisant du CO₂ liquide ou supercritique, en tant qu'agent d'extraction, avec lequel au moins un composant est extrait d'un mélange de matières, le CO₂ traversant le mélange de matières dans le contenant d'extraction, **caractérisé en ce que** le mélange de matières consiste en un produit pâteux et le mélange de matières est mélangé avec un additif poreux, de sorte que le CO₂ traverse le mélange pendant l'extraction, le mélange de l'additif poreux et du mélange de matières étant fluide en raison de l'additif poreux ajouté contrairement au mélange de matières seul, et le mélange fluide de l'additif poreux et du mélange de matières étant introduit dans le contenant d'extraction.

3. Procédé selon la revendication 1 ou 2, **caractérisé en ce que** le mélange de matières adhère à l'additif poreux pendant l'extraction.

4. Procédé selon la revendication 1 ou 3, **caractérisé en ce que** les particules en poudre du mélange de matières ont des tailles de particules qui présentent un maximum de tailles de particules de la distribution des tailles de particules inférieur à 150 µm, de préférence inférieur à 50 µm, de préférence inférieur à 30 µm, de préférence inférieur à 10 µm, de préférence inférieur à 7 µm, de manière particulièrement préférée inférieur à 5 µm.

5. Procédé selon au moins l'une quelconque des revendications précédentes, **caractérisé en ce que** l'additif poreux est un matériau mésoporeux ou macroporeux.

6. Procédé selon au moins l'une quelconque des revendications précédentes, **caractérisé en ce que** l'additif poreux est un matériau gonflé.

7. Procédé selon au moins l'une quelconque des revendications précédentes, **caractérisé en ce que** l'additif poreux est un matériau minéral.

8. Procédé selon la revendication 7, **caractérisé en ce que** l'additif poreux est au moins un matériau du groupe constitué par l'argile, le verre, le grès, la perlite, le gel de silice, la diatomite, la pierre ponce.

9. Procédé selon au moins l'une quelconque des revendications 1 à 6, **caractérisé en ce que** l'additif poreux est un matériau organique.

10. Procédé selon la revendication 9, **caractérisé en ce que** l'additif est au moins un matériau du groupe constitué par le plastique, la cellulose, les polyélectrolytes.

11. Procédé selon au moins l'une quelconque des revendications précédentes, **caractérisé en ce que** le rapport de mélange entre l'additif poreux et le mélange de matières est de 10:1 à 1:2 % en volume, de préférence de 5:1 à 1:2 % en volume, de manière particulièrement préférée de 2:1 à 1:2 % en volume.

12. Procédé selon au moins l'une quelconque des revendications précédentes, **caractérisé en ce que** le choix de l'additif poreux et son mélange avec le mélange de matières permet d'augmenter de manière ciblée ou de réduire de manière ciblée l'extraction d'une matière du mélange de matières en comparaison d'une extraction du mélange de matières sans additif poreux.
